# EUROPÄISCHE PATENTANMELDUNG

(11) **EP 0 560 196 A2**
(43) Veröffentlichungstag der Anmeldung: **15.09.1993**
(21) Anmeldenummer: 93103386.4
(22) Anmeldetag: 04.03.1993
(51) Int. Cl.: G05B 19/403

(54) **Einrichtung zur Steuerung und Bedienung einer Koordinatenmessmaschine**

(30) Priorität: 07.03.1992 DE 4207250
(71) Anmelder: Mauser-Werke Oberndorf GmbH, D-78727 Oberndorf (DE)
(72) Erfinder: Welte, Elmar, Dipl.-Ing., W-8500 Nürnberg 50 (DE); Kaltenbach, Werner, W-7213 Dunningen (DE); Grün, Bodo, Dipl.-Ing., W-7320 Göppingen (DE)
(74) Vertreter: Hofmann, Gerhard, Dipl.-Ing. Patentassessor

(57) **Zusammenfassung**

Eine Einrichtung zum Steuern einer Koordinatenmeßmaschine, insbesondere deren Bahnbewegungen und Meßwerterfassung, soll ohne eigenen Prozeßrechner arbeiten. Hierfür ist an die Meßmaschine eine CNC-Steuereinheit angeschlossen, die die Bahnbewegungen und Meßwerterfassung mit NC-Adressen steuert. Als Betriebssystem für die CNC-Steuereinheit ist ein Echtzeit-Betriebssystem vorgesehen.

## Beschreibung

Die Erfindung betrifft eine Einrichtung zum Steuern einer Koordinatenmeßmashine.

In der DE 36 02 457 A1 ist ein rechnergesteuertes Fertigungssystem beschrieben. Einer Transporteinrichtung sind Bearbeitungsmaschinen und eine Koordinatenmeßmaschine Zugeordnet. Zur Steuerung der Transporteinrichtung und der Bearbeitungsmasschinen ist jeweils eine CNC/SPS-Steuereinheit vorgesehen. Die Meßmaschine ist mittels einer speziell auf sie ausgelegten Steuereinheit und eines Prozeßrechners gesteuert. Solche Prozeßrechner sind mit CNC-Steuereinheiten nicht vergleichbar. Insbesondere läßt sich ein solcher Prozeßrechner nicht durch eine CNC-Steuereinheit ersetzen.

Bei der DE 36 02 457 A1 ist den CNC/SPS-Steuereinheiten und dem Prozeßrechner ein Leitrechner übergeordnet.

In "Fertigungstechnik, Handbuch für Industrie und Wissenschaft", Herausgeber: H.J. Warnecke und W. Dutschke, Springer-Verlag, 1984, Seite 289, 290, ist eine rechnergesteuerte Koordinatenmeßmaschine gezeigt, die mit einem CNC-Rechner und einem übergeordneten Leitrechner arbeitet. Um den CNC-Rechner mit der Koordinatenmeßmaschine zu koppeln, ist eine aufwendige Steuer- und Anpaßelektronik notwendig.

CNC-Steuereinheiten sind marktbekannt (z. B. Bosch CC320). Solche CNC-Steuereinheiten sind für den Fachmann ersichtlich für Bearbeitungsmaschinen, nicht jedoch für Meßmaschinen vorgesehen. Sie arbeiten mit NC-Adressen nach DIN 66 025, die dem Fachmann der Steuerung von Bearbeitungsmaschinen bekannt sind. Dagegen arbeiten die bekannten Koordinatenmeßmaschinen mit Befehlen nach eigenen, firmenspezifischen Programmen, weshalb regelmäßig lange Einarbeitungszeiten für die Bedienungsperson notwendig sind.

Aufgabe der Erfindung ist es, bei einer Einrichtung der eingangs genannten Art, das Steuern einer Koordinatenmeßmaschine mit einer Steuerung wie für ein Bearbeitungszentrum zu ermöglichen, um so eine für jede Person zugängliche Norm einzuführen.

Erfindungsgemäß ist obige Aufgabe durch die Merkmale der Kennzeichenteile von Patentanspruch 1 und Patentanspruch 2 gelöst.

Diese Einrichtung hat den Vorteil, daß zur Steuerung der Bewegung der Meßmaschine, speziell deren Tastkopfes und zur Meßdatenerfassung eine von Bearbeitungsmaschinen an sich bekannte CNC-Steuereinheit als Hardware eingesetzt wird. Es erübrigt sich somit ein speziell an die Meßmaschine angepaßter Prozeßrechner.

Dabei ist für die Bedienung besonders vorteilhaft, daß mit Befehlen bzw. Adressen aus dem NC-Adressenvorrat gearbeitet wird, die einem auf CNC-Bearbeitungsmaschinen geschulten Personal geläufig sind. Insbesondere kann die Programmierung der Bahnbewegungen des Tastkopfes der Meßmaschine und die Meßwerterfassung in gleicher Weise wie bei Bearbeitungsmaschinen erfolgen.

Durch das neue Betriebssystem, welches quasi als neue Schicht in die vorhandene Einrichtung eingezogen wird, wird das geschaffene Gesamtsystem offen für viele Kombinationen und Funktionalitäten der Steuerung, Bedienung, Wartung und dem Service der Meßmaschinen.

Durch das Echtzeit-Betriebssystem ist erreicht, daß die Bahnbewegungen und die Meßwerterfassung wie sonst bei einem Prozeßrechner erfolgen. Vorzugsweise ist das Echtzeit-Betriebssystem UNIX-kompatibel.

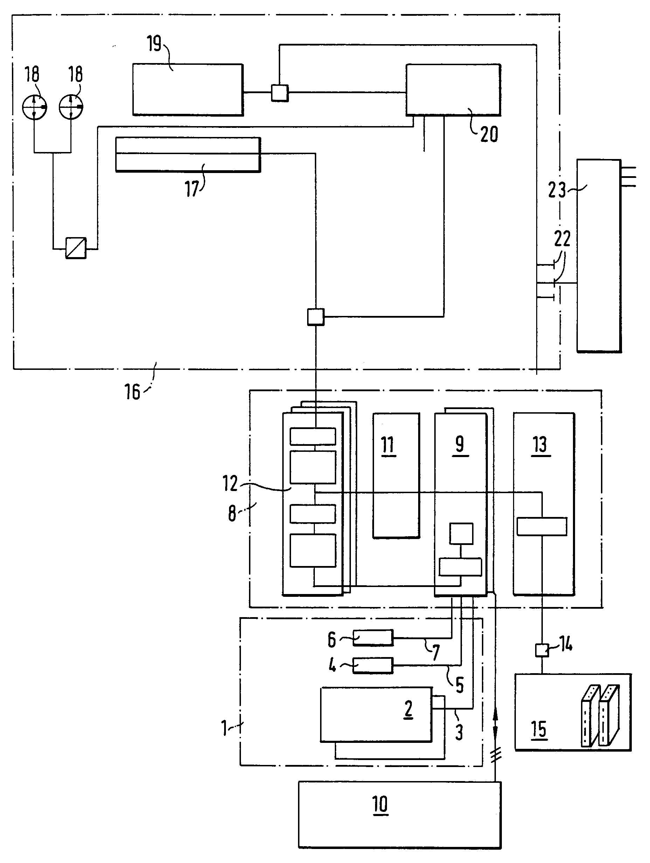

Vorteilhafte Ausgestaltungen der Erfindung ergeben sich aus den Unteransprüchen und der folgenden Beschreibung eines Ausführungsbeispieles. Die einzige Figur zeigt ein Blockschaltbild zur Steuerung und Bedienung einer Koordinatenmeßmaschine und gegebenenfalls zum zusätzlichen Steuern einer Bearbeitungsmaschine in schematischer Darstellung.

Eine Koordinatenmeßmaschine (1) weist Antriebe (2) zur Bewegung ihres Tastkopfes in den Freiheitsgraden (X, Y, Z, u, v, w, A, B, C) auf. Die Antriebe (2) sind über eine Verbindung (3) steuerbar.

Die Koordinatenmeßmaschine weist Maßstäbe (4) für ihre Koordinaten-Achsen auf. Deren Istwerte sind über eine Verbindung (5) erfaßbar. Die Schaltsignale eines Tastkopfes (6) der Meßmaschine (1) sind über eine elektrische Verbindung (7) erfaßbar.

Die elektrischen Verbindungen (3, 5, 7) liegen an einer CNC-Steuereinheit (8) und speziell an deren Servo-Baugruppen (9) an. Eine solche CNC-Steuereinheit (Bosch CC 320) ist zur Steuerung einer Bearbeitungsmaschine (10) marktbekannt. Sie weist einen Speicher (11) auf. Außerdem ist sie mit Mikroprozessoren (12) ausgestattet. An eine Kopplungs-Baugruppe (13) der CNC-Steuereinheit (8) ist über eine serielle Schnittstelle (14) eine Einheit (15) (beispielsweise Bosch CL 300) anschließbar, die die CNC-Steuereinheit (8) zu einer CNC/SPS-Steuereinheit, also einer speicherprogrammierbaren CNC-Steuereinheit macht.

An die CNC-Steuereinheit (8), speziell deren Mikroprozessoren (12), ist eine Bedieneinheit (16) anschließbar. Diese weist ein Tastenfeld (17), Joysticks (18) und ein Anzeigefeld (19) auf. In die Bedieneinheit (16) ist ein eigener UNIX-fähiger Mikroprozessor (20), beispielsweise ein 32-Bit-Prozessor (Intel) integriert, an dem einerseits die Joysticks (18), das Tastenfeld (17) und das Anzeigefeld (19) über eine LAN-Schnittstelle angeschlossen sind. Andererseits ist der Mikroprozessor (20) mit den Mikroprozessoren (12) der CNC-Steuereinheit (8) und über eine Netzwerk-Schnittstelle (22) mit einem UNIX-fähigen Auswerterechner (23) verbunden, an den weitere Ausgabe- und Eingabeeinheiten angeschlossen sein können.

Als Betriebssystem für die CNC-Steuereinheit (8) ist ein UNIX-kompatibles Echtzeit-Betriebssystem vorgesehen. In dieses ist der Mikroprozessor (20) der Bedieneinheit (16) mit einbezogen.

Mit dem UNIX-kompatiblen Betriebssystem kann die CNC/SPS-Steuereinheit (8) die Antriebe (2) meßmaschinengerecht betreiben und die jeweiligen Stellungen der Maßstäbe (4) und des Tastkopfes (6) meßmaschinengerecht erfassen und der Weiterverarbeitung zuführen. Die an der Bedieneinheit (16) erfolgende Eingabe bzw. Programmierung von Solldaten für die Antriebe (2) und die Anzeige von Achspositionen am Anzeigefeld (19) erfolgen in der NC-Syntax entsprechend DIN 66 025. Dabei werden für spezielle Funktionen der Meßmaschine (1) freie G- oder H-Funktionen nach DIN 66 025 definiert. Das Bedienpersonal kann also mit seinen Sprachkenntnissen der NC-Syntax ohne größere Schwierigkeiten auch die Meßmaschine (1) hinsichtlich der Steuerung der Antriebe (2) und der Auswertung der Meßergebnisse betreiben. Der Auswerterechner (23) kann an weitere Eingabe- und Ausgabeeinrichtungen angeschlossen sein.

Durch eine Erweiterung der CNC-Steuereinheit (8) kann diese auch zusätzlich an eine Bearbeitungseinheit (10), beispielsweise Fräsmaschine, angeschlossen sein. Diese ist dann über die Bedieneinheit (16) in an sich üblicher Weise steuerbar.

Die besonderen Vorteile der geschilderten Einrichtung sind in dem verbesserten Service und in der Wartung zu sehen. Eine eingeschaltete Bedienmannschaft ist damit in der Lage, den gesamten Maschinenpark eines Unternehmens, nämlich Bearbeitungs- und Meßmaschinen, zu warten und zu betreuen. Durch die erfinderischen Schritte findet eine direkte Integration in die informationstechnische Infrastruktur eines Unternehmens statt.

## Patentansprüche

1. Einrichtung zur Steuerung und Bedienung einer Koordinatenmeßmaschine,
dadurch gekennzeichnet,
daß an die Koordinatenmeßmaschine (1) als Steuereinrichtung eine CNC-Steuereinheit (8), vorzugsweise CNC/SPS-Steuereinheit (8, 15), angeschlossen ist, die die Bahnbewegungen und die Meßdatenerfassung der Meßmaschine mit NC-Adressen steuert, und daß als Betriebssystem für die CNC-Steuereinheit (8) ein Echtzeit-Betriebssystem vorgesehen ist.

2. Einrichtung zur Steuerung und Bedienung einer Koordinatenmeßmaschine,
dadurch gekennzeichnet,
daß die Hardware-Komponenten einer CNC-Steuereinheit (8), vorzugsweise einer CNC/SPS-Steuereinheit (8, 15) vorgesehen sind, welche die Bahnbewegungen und die Meßdatenerfassung der Koordinatenmeßmaschine (1) mit NC-Adressen steuert,
daß eine Bedieneinheit (16) eingerichtet ist, die ein Tastenfeld (17), Joysticks (18) und ein Anzeigefeld (19) aufweist und in die ein eigener, UNIX-fähiger Mikroprozessor (20) integriert ist, der seinerseits mit der CNC-Steuereinheit (8) und mit dem Auswerterechner (23) verbunden ist,
daß für das Verwalten verschiedener Systeme ein übergeordnetes, UNIX-fähiges und multiprozessorfähiges Betriebssystem vorgesehen ist, wobei verschiedene Prozessorarchitekturen in einem System als Verwaltung des Multiprozessor-Systems eingerichtet sind, und daß eine CNC-Grundfunktionalität mit einer Sprachenerweitung für die Befehlsstruktur eingerichtet ist.

3. Einrichtung nach Anspruch 1 oder 2,
dadurch gekennzeichnet,
daß das Echtzeit-Betriebssystem UNIX-kompatibel ist.

4. Einrichtung nach den Ansprüchen 1, 2 oder 3,
dadurch gekennzeichnet,
daß eine mit Tastenfeld (17) und Anzeigefeld (19) versehene Bedieneinheit (16) einen eigenen Mikroprozessor (20) aufweist, der mit der CNC-Steuereinheit (8) verbunden ist.

5. Einrichtung nach einem der vorhergehenden Ansprüche,
dadurch gekennzeichnet,
daß durch die CNC-Steuereinheit (8) zusätzlich auch wenigstens eine Bearbeitungsmaschine steuerbar ist.
